# EUROPEAN PATENT SPECIFICATION

(11) **EP 3 113 961 B1**
(45) Date of publication and mention of the grant of the patent: **30.01.2019**
(21) Application number: 15758581.1
(22) Date of filing: 10.02.2015
(51) Int. Cl.: B60C 11/12, B60C 11/13

(54) **TIRE TREAD FEATURING A SIPE**
REIFENPROFIL MIT EINER LAMELLE
BANDE DE ROULEMENT PRÉSENTANT UNE LAMELLE

(30) Priority: 07.03.2014 US 201461949309 P
(43) Date of publication of application: 11.01.2017
(73) Proprietor: Bridgestone Americas Tire Operations, LLC, Nashville, TN 37201 (US)
(72) Inventor: JIN, Jie, Copley, Ohio 44321 (US); WILLIAMS, Cory, Medina, Ohio 44256 (US); WOODWARD, Joseph C., Akron, Ohio 44313 (US)
(74) Representative: Oxley, Robin John George
(86) International application number: PCT/US2015/015108
(87) International publication number: WO 2015/134158

(56) References cited:
- EP-A1- 2 070 731
- EP-A2- 1 529 659
- JP-A- 2007 045 316
- US-A1- 2006 169 377
- US-A1- 2006 169 377
- US-A1- 2007 095 447
- US-A1- 2010 206 447
- US-A1- 2010 218 867
- US-A1- 2010 224 297

## Description

### BACKGROUND

Tires, including Off-Road Radial ("ORR") tires, may comprise tread featuring sipes. The presence of sipes in a tire tread may create more surface edges to engage a roadway, which may increase traction in adverse road conditions. For example, a tire tread including sipes may perform better in icy road conditions than a tire tread not including sipes.

However, the addition of sipes to a tire tread block may reduce block stiffness, which may result in undesirable irregular wear patterns in the tire. Additionally, a tire tread featuring sipes may undesirably capture stones in the sipes. Stones caught in a tire tread's sipes may reduce the effectiveness of the tire tread in increasing traction, may damage the tire or tire tread, may cause irregular wear patterns in the tire, and may create a safety hazard if the stones are ejected as the tire travels down a roadway. JP 2007-045316 showing the features of the preamble of claim 1, discloses a pneumatic tire capable of improving braking performance and uneven wear resistance performance on an icy road surface. The tire includes three-dimensional radial sipes along inner wall surfaces of a tire tread, wherein the radial sipes include waveform sipes having a convex portion and a concave portion having a constant wavelength. US 2006/169377 discloses a pneumatic tire that provides enhanced tire performance and increased block stiffness during braking, driving, and cornering. The pneumatic tire includes a plurality of blocks defined by longitudinal and lateral grooves, wherein angular, zigzag sipes are formed on a tread surface in the tire circumferential direction and extend inside the block at at least two positions in the tire radial direction. EP 2070731 discloses a tire having improved winter performance, such that it performs equally well on icy roads and dry roads. The tire has a tread including tread blocks or tread ribs, which are each provided with at least one incision extending in the radial direction in the tread block or tread rib interior, and which has cut walls with corresponding portions having a waveform comprised of a first section and a second section. EP 1529659 discloses a winter tire having lateral grooves in shoulder block rows at outer zones at the appropriate pitch, and which are narrower than those within the shoulder block rows at the inner zones. The shoulder block rows at the outer zones are wider than those at the inner zones. The gaps between the cuts in the outer shoulder block rows are larger than those between the cuts at the inner rows, and the outer cuts are narrower than the inner cuts.

What is needed is a tire tread block featuring sipes configured to reduce irregular wear and capturing of stones.

### SUMMARY

In one embodiment a tire is provided, the tire comprising: a tread comprising at least one of a tread block and a tread rib; at least one of the tread block and the tread rib comprises at least one sipe, wherein the at least one sipe comprises at least one convex portion and at least one concave portion forming an S-shaped geometry along at least a portion of a length of the sipe, wherein the S-shaped geometry along at least a portion of the length of the sipe has an amplitude, and wherein the amplitude varies along a radial height of the sipe, wherein the at least one sipe includes an upper vertical section and a lower vertical section oriented substantially radially within the sipe, and wherein the at least one sipe includes a first curvilinear portion and a second curvilinear portion oriented substantially radially within the sipe, and forming an S-shaped geometry along the radial height of the sipe, characterized in that the S-shaped geometry has a wavelength, and the wavelength of the S-shaped geometry varies along a height of the sipe.

[DELETED]

In one embodiment, a tire sipe blade is provided.

### BRIEF DESCRIPTION OF THE DRAWINGS

The accompanying figures, which are incorporated in and constitute a part of the specification, illustrate various example configurations, and are used merely to illustrate various example embodiments. In the figures, like elements bear like reference numerals.
**FIG. 1** illustrates a top elevational view of an example embodiment of a tire tread having a sipe featuring an S-shaped geometry.
**FIG. 2** illustrates a side elevational view of an example embodiment of a tire tread having a sipe featuring an S-shaped geometry.
**FIG. 3** illustrates a plan view of an example embodiment of a tire tread having a sipe featuring an S-shaped geometry.
**FIG. 4** illustrates a perspective view of an example embodiment of a tire tread having a sipe featuring an S-shaped geometry.
**FIG. 5** illustrates a plan view of an example embodiment of a tire tread having a sipe featuring an S-shaped geometry.
**FIG. 6A** illustrates a perspective view of an example embodiment of a tire sipe blade for forming a sipe featuring an S-shaped geometry.
**FIG. 6B** illustrates a side elevational view of an example embodiment of a tire sipe blade for forming a sipe featuring an S-shaped geometry.
**FIG. 6C** illustrates a top elevational view of an example embodiment of a tire sipe blade for forming a sipe featuring an S-shaped geometry.
**FIG. 7** illustrates a plan view of an example embodiment of a tire tread having a sipe featuring a variable S-shaped geometry.
**FIG. 8** illustrates a perspective view of an example embodiment of a tire tread having a sipe featuring a variable S-shaped geometry.
**FIG. 9** illustrates a plan view of an example embodiment of a tire tread having a sipe featuring a variable S-shaped geometry.
**FIG. 10A** illustrates a perspective view of an example embodiment of a tire sipe blade for forming a sipe featuring a variable S-shaped geometry.
**FIG. 10B** illustrates a side elevational view of an example embodiment of a tire sipe blade for forming a sipe featuring a variable S-shaped geometry.
**FIG. 10C** illustrates a top elevational view of an example embodiment of a tire sipe blade for forming a sipe featuring a variable S-shaped geometry.

### DETAILED DESCRIPTION

Tires not intended for operation on smooth, dry surfaces typically comprise a tread pattern, including a least one groove, at least one rib, and/or a plurality of tread blocks. Tires intended for operation in inclement conditions, including for example icy or snowy conditions, may additionally comprise a plurality of sipes in the tire tread. The addition of sipes in the tire tread may result in more surface edges in the tire tread for engagement with the icy or snowy roadway.

If one or more tire is mounted on a vehicle, the entire weight of the vehicle, and the one or more tire, is supported by the contact patch of the one or more tire. A tire's contact patch is that portion of the tire in contact with a roadway or other surface supporting the vehicle at any given instant in time. Many tires, including for example ORR tires, may be used on heavy vehicles and thus may experience great pressures and forces in the contact patch's interface with the roadway.

Stones or other debris encountered between the tire's contact patch and the roadway can be forced into the tire's tread with great force. In a tire tread comprising sipes, stones or other debris may be lodged in the sipe, thus reducing the sipe's effectiveness at increasing traction, causing damage to the tire or tire tread, causing irregular wear, and/or creating a safety hazard should the stone or other debris be ejected during tire operation.

Traditional sipes comprise substantially radially-oriented, narrow slits extending from a tread surface into the tread. These traditional sipes typically include straight, parallel walls, providing a stone or other debris easy access to the void created by the sipe. In some instances, a stone or other debris can become lodged within the sipe in such a manner so as to affect the stiffness of a tread block or rib containing the sipe, resulting in irregular wear or damage to the tire tread.

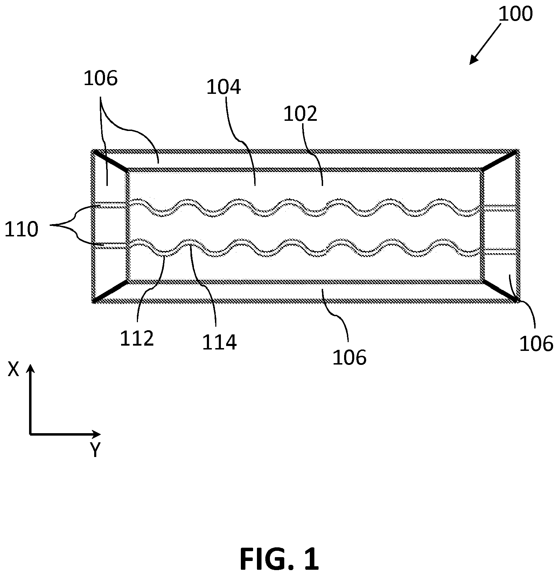

**FIG. 1** illustrates a top elevational view of an example embodiment of a tire tread **100.** Tread **100** may comprise a tread block **102.** Tread block **102** may comprise a ground-contacting surface **104** and at least one side surface **106.**

In one embodiment, tread **100** comprises at least one of tread block **102,** and a tread rib (not shown). Tread **100** may comprise a combination of tread blocks **102** and at least one tread rib (not shown). At least one tread rib (not shown) may be oriented substantially circumferentially about tire tread **100** (i.e., substantially parallel to the X-axis).

In one embodiment, tread block **102** is oriented such that it comprises a longer dimension (**L1/L2**) oriented in an axial direction (i.e., substantially parallel to Y-axis). Tread block **102** may be oriented such that it comprises a longer dimension (**L1/L2**) oriented in a circumferential direction (i.e., substantially parallel to X-axis). Tread block **102** may be oriented at an angle relative to the axial direction or the circumferential direction.

Tread block **102** may comprise at least one sipe **110.** At least one sipe **110** may be oriented substantially axially (i.e., substantially parallel to the Y-axis), substantially circumferentially (i.e., substantially parallel to the X-axis), and/or inclined at an angle relative to either the X-axis or the Y-axis. At least one sipe **110** may include a plurality of sipes oriented substantially parallel to one another. At least one sipe **110** may include a plurality of sipes inclined at an angle relative to one another.

At least one sipe **110** may comprise an S-shaped geometry. In one embodiment, sipe **100** may comprise a plurality of alternating convex portions **112** and concave portions **114** (relative to at least one side surface **106**). Convex portions **112** and concave portions **114** may be oriented as illustrated in **FIG. 1** so as to form a continuous S-shaped geometry along at least a portion of the length of sipe **110.**

The S-shaped geometry of sipe **110** may extend all the way to at least one side surface **106.** Sipe **110** may intersect at least one side surface **106** with a substantially straight geometry portion (not shown), which intersects at least one of convex portion **112** and concave portion **114,** such that the S-shaped geometry does not extend to side surface **106.** In one embodiment, sipe **110** may not extend to any side surface **106,** such that sipe **110** is contained within an interior portion of ground-contacting surface **104.**

In one embodiment, sipe **110** may comprise a S-shaped geometry similar to a sinusoidal curve. The amplitude of the curve in sipe **110** varies along the length of sipe **110.** The wavelength of the curve in sipe **110** varies along the length of sipe **110.** In one embodiment, a plurality of sipes **110** may be contained within tread block **102** or tread rib (not shown), and the curves of sipes **110** may be in phase with one another. Alternatively, the curves of sipes **110** may be out of phase with one another.

Tread block **102** may comprise a length and a width. Tread block **102** may comprise a tapered orientation, such that ground-contacting surface **104** has a smaller area than a base of tread block **102.** Tread block **102** may comprise any of a variety of cross-sections, including a substantially rectangular cross-section, a substantially square cross-section, a substantially triangular cross-section, a substantially trapezoidal cross-section, or a cross-section substantially similar to any regular or irregular shape.

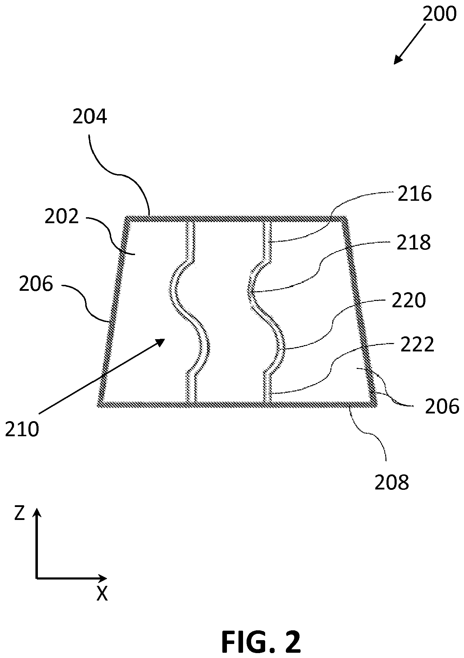

**FIG. 2** illustrates a side elevational view of an example embodiment of a tire tread **200.** Tread **200** may comprise a tread block **202.** Tread block **202** may comprise a ground-contacting surface **204,** at least one side surface **206,** and a base **208.**

In one embodiment, tread **200** comprises at least one of tread block **202,** and a tread rib (not shown).

Tread block **202** may comprise at least one sipe **210.** At least one sipe **210** may open to at least one side surface **206.** In one embodiment, at least one sipe **210** may not open to any side surface **206.**

At least one sipe **210** may comprise an upper vertical section **216** in communication with ground-contacting surface **204.** Upper vertical section **216** may comprise a sipe section substantially parallel to the Z-axis. In one embodiment, upper vertical section **216** may be inclined relative to the Z-axis. In one embodiment, upper vertical section **216** is substantially coplanar with a YZ-plane. In one embodiment, upper vertical section **216** is inclined at an angle relative to a YZ-plane.

At least one sipe **210** may comprise a first curvilinear portion **218.** At least one sipe **210** may comprise a second curvilinear portion **220.** First curvilinear portion **218** and second curvilinear portion **220** may be oriented so as to form an S-shaped geometry. In one embodiment, at least one sipe **210** comprises additional curvilinear portions (not shown) oriented relative to first curvilinear portion **218** and second curvilinear portion **220** so as to form an extended S-shaped geometry.

In one embodiment, first curvilinear portion **218** may communicate with ground-contacting surface directly. In one embodiment, second curvilinear portion **220** may communicate with base **208** directly. Additional curvilinear portions (not shown) may communicate with ground contacting portion **204,** base **208,** upper vertical section **216,** and/or a lower vertical section **222.**

At least one sipe **210** may comprise lower vertical section **222.** Lower vertical section **222** may contact base **208.** Lower vertical section **222** may comprise a sipe section substantially parallel to the Z-axis. In one embodiment, lower vertical section **222** may be inclined relative to the Z-axis. In one embodiment, lower vertical section **222** is substantially coplanar with a YZ-plane. In one embodiment, lower vertical section **222** is inclined at an angle relative to a YZ-plane. In one embodiment, upper vertical section **216** and lower vertical section **222** are substantially parallel. In another embodiment, upper vertical section **216** and lower vertical section **222** are substantially coplanar.

In one embodiment, first curvilinear portion **218** and second curvilinear portion **220** of sipe **210** may comprise a S-shaped geometry similar to a sinusoidal curve. The amplitude of the curve in sipe **210** varies along the height of sipe **210.** The wavelength of the curve in sipe **210** varies along the height of sipe **210.** In one embodiment, a plurality of sipes **210** may be contained within tread block **202** or tread rib (not shown), and the curves of sipes **210** may be in phase with one another. Alternatively, the curves of sipes **210** may be out of phase with one another.

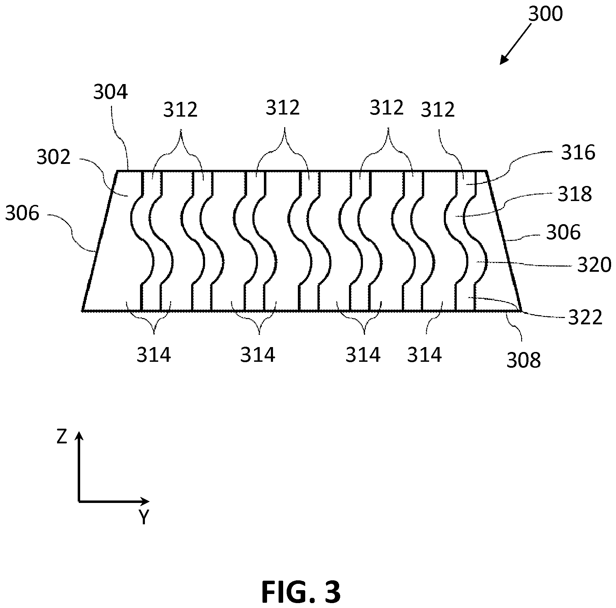

**FIG. 3** illustrates a plan view of an example embodiment of a tire tread **300.** Tread **300** may comprise a tread block **302.** Tread block **302** may comprise a ground-contacting surface **304,** at least one side surface **306,** and a base **308.**

**FIG. 3** represents a plan view wherein tread block **302** was separated into two halves at the sipe (not shown), which may substantially correspond to a YZ-plane. The sipe (not shown) may comprise at least one convex portion **312,** and at least one concave portion **314.** At least one convex portion **312** and at least one concave portion **314** may alternate to result in an S-shaped geometry within the sipe (not shown). In one embodiment, at least one convex portion **312** and at least one concave portion **314** may correspond to at least one convex portion **112** and at least one concave portion **114** illustrated in **FIG. 1****.**

In one embodiment, at least one convex portion **312** comprises a substantially S-shaped geometry in a YZ-plane. At least one convex portion **312** may comprise an upper vertical section **316,** a first curvilinear portion **318,** a second curvilinear portion **320,** and a lower vertical section **322.** Upper vertical section **316** may communicate with ground-contacting portion **304.** Lower vertical section **322** may contact base **308.**

In one embodiment, first curvilinear portion **318** and second curvilinear portion **320** of the sipe (not shown) may comprise a S-shaped geometry similar to a sinusoidal curve. The amplitude of the curve in the sipe (not shown) varies along the height of the sipe (not shown). The wavelength of the curve in the sipe (not shown) varies along the height of the sipe (not shown). In one embodiment, a plurality of sipes (not shown) may be contained within tread block **302** or tread
rib (not shown), and the curves of the sipes (not shown) may be in phase with one another. Alternatively, the curves of the sipes (not shown) may be out of phase with one another.

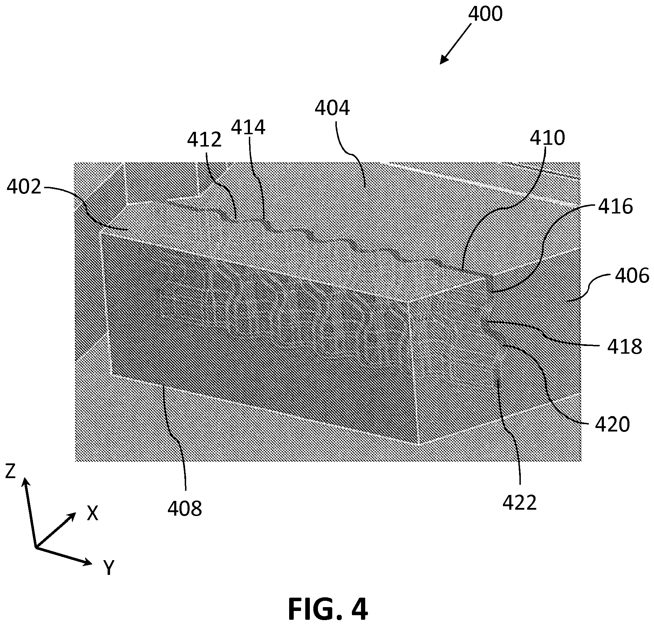

**FIG. 4** illustrates a perspective view of an example embodiment of a tire tread **400.** Tire tread **400** may comprise a tread block **402.** Tread block **402** may comprise a ground-contacting surface **404,** at least one side surface **406,** and a base **408.**

Tread block **402,** or a tread rib (not shown) may comprise at least one sipe **410.** At least one sipe **410** may comprise at least one convex portion **412** and at least one concave portion **414.** In one embodiment, sipe **410** comprises alternating convex portions **412** and concave portions **414** forming an S-shaped geometry in a plane substantially parallel to an XY-plane.

At least one sipe **410** may comprise an upper vertical section **416,** a first curvilinear portion **418,** a second curvilinear portion **420,** and a lower vertical section **422.** First curvilinear portion **418** and second curvilinear portion **420** may form an S-shaped geometry in a plane substantially parallel to an XZ-plane.

As illustrated in **FIG. 4****,** at least one sipe **410** may comprise an S-shaped geometry in each of an XY-plane, an XZ-plane, and a YZ-plane. In another embodiment, at least one sipe **410** may comprise an S-shaped geometry in at least one of an XY-plane, an XZ-plane, and a YZ-plane. In another embodiment, at least one sipe **410** may comprise an S-shaped geometry in at least two of an XY-plane, an XZ-plane, and a YZ-plane.

In one embodiment, the S-shaped geometry within sipe **410** creates a series of protrusions and indentations configured to engage one another and increase stiffness of tread block **402** or a tread rib (not shown). Increased stiffness of tread block **402** or a tread rib (not shown) may prevent, mitigate, or reduce irregular wearing of tread block **402** or a tread rib (not shown).

In one embodiment, the S-shaped geometry within sipe **410** eliminates the direct path extending radially-inwardly from a ground-contact surface as featured in traditional sipes. The S-shaped geometry may create an indirect path that prevents, or at least reduces the occurrence of, stones or other debris from entering, or lodging, within sipe **410.** In this manner, the S-shaped geometry may prevent, or at least reduce the occurrence of, stones or other debris from reducing sipe **410**'s effectiveness at increasing traction, causing damage to tire tread **400** and/or tread block **402,** and/or creating a safety hazard resulting from lodged stones or other debris being ejected during tire operation.

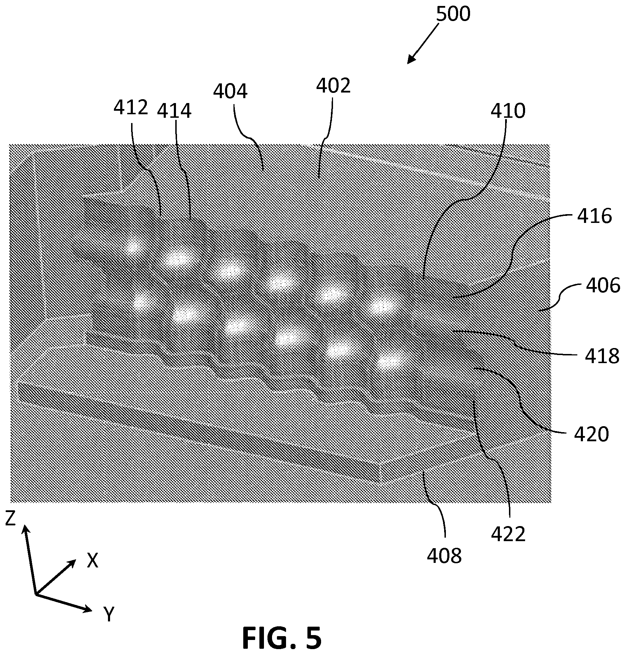

**FIG. 5** illustrates a plan view of an example embodiment of a tire tread **500.** Tire tread **500** may comprise a tread block **402.** Tread block **402** may comprise a ground-contacting surface **404,** at least one side surface **406,** and a base **408.**

**FIG. 5** represents a plan view wherein tread block **402** was separated into two halves at the sipe (not shown), which may substantially correspond to a YZ-plane.

Tread block **402,** or a tread rib (not shown) may comprise at least one sipe (not shown). At least one sipe (not shown) may comprise at least one convex portion **412** and at least one concave portion **414.** In one embodiment, a sipe (not shown) comprises alternating convex portions **412** and concave portions **414** forming an S-shaped geometry in a plane substantially parallel to an XY-plane.

At least one sipe (not shown) may comprise an upper vertical section **416,** a first curvilinear portion **418,** a second curvilinear portion **420,** and a lower vertical section **422.** First curvilinear portion **418** and second curvilinear portion **420** may form an S-shaped geometry in a plane substantially parallel to an XZ-plane.

As illustrated in **FIG. 5****,** at least one sipe (not shown) may comprise an S-shaped geometry in each of an XY-plane, an XZ-plane, and a YZ-plane. In another embodiment, at least one sipe (not shown) may comprise an S-shaped geometry in at least one of an XY-plane, an XZ-plane, and a YZ-plane. In another embodiment, at least one sipe (not shown) may comprise an S-shaped geometry in at least two of an XY-plane, an XZ-plane, and a YZ-plane.

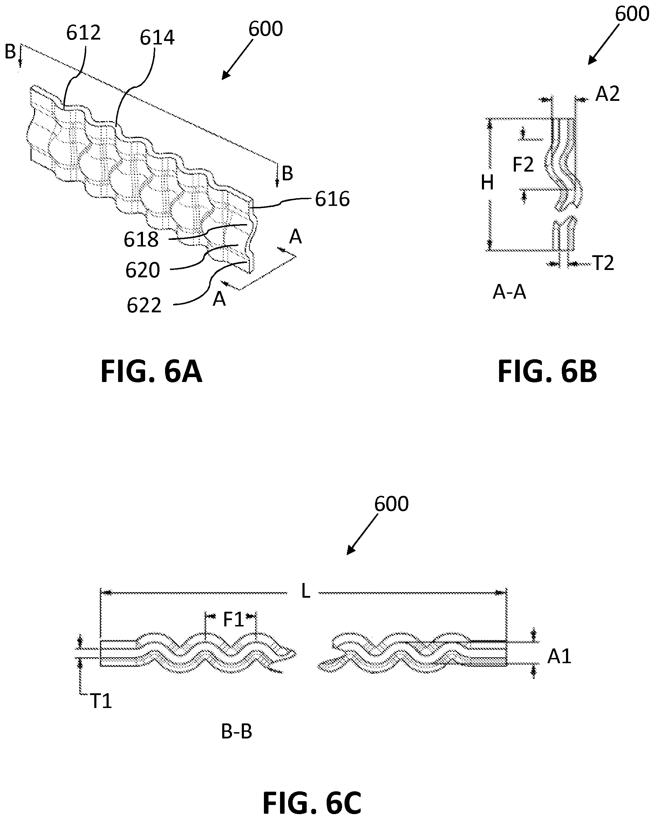

**FIG. 6A** illustrates a perspective view of an example embodiment of a tire sipe blade **600.** Tire sipe blade **600** may be used in forming a sipe featuring an S-shaped geometry. A tire formed using tire sipe blade **600** may have sipe dimensions substantially similar to those described below with respect to tire sipe blade **600.**

As illustrated, tire sipe blade **600** may comprise an S-shaped geometry in planes corresponding to each of an XY-plane, an XZ-plane, and a YZ-plane. In another embodiment, tire sipe blade **600** may comprise an S-shaped geometry in at least one of an XY-plane, an XZ-plane, and a YZ-plane. In another embodiment, tire sipe blade **600** may comprise an S-shaped geometry in at least two of an XY-plane, an XZ-plane, and a YZ-plane.

Tire sipe blade **600** may comprise at least one convex portion **612,** at least one concave portion **614,** an upper vertical section **616,** a first curvilinear portion **618,** a second curvilinear portion **620,** and a lower vertical section **622.**

**FIG. 6B** illustrates a side elevational view of an example embodiment of a tire sipe blade **600** taken about a view A-A.

Tire sipe blade **600** may include S-shaped geometry having an amplitude **A2.** Amplitude **A2** may be any of a variety of values. In one embodiment, amplitude **A2** may range between about 0.25 mm and about 20.0 mm. In another embodiment, amplitude **A2** may be greater than about 20.0 mm. In another embodiment, amplitude **A2** may be less than about 0.25 mm.

Tire sipe blade **600** may include S-shaped geometry having a wavelength **F2.** Wavelength **F2** may be any of a variety of values. In one embodiment, wavelength **F2** may range between about 1.00 mm and about 85.0 mm. In another embodiment, wavelength **F2** may be greater than about 85.0 mm. In another embodiment, wavelength **F2** may be less than about 1.00 mm.

Tire sipe blade **600** may comprise a thickness **T2.** Thickness **T2** may be any of a variety of values. In one embodiment, thickness **T2** may range between about 0.25 mm and about 10.0 mm. In another embodiment, thickness **T2** may be greater than about 10.0 mm. In another embodiment, thickness **T2** may be less than about 0.25 mm.

Tire sipe blade **600** may comprise a height **H.** Height **H** may be any of a variety of values. In one embodiment, height **H** may range between about 3.00 mm and about 275.0 mm. In another embodiment, height **H** may be greater than about 275.0 mm. In another embodiment, height **H** may be less than about 3.00 mm.

**FIG. 6C** illustrates a top elevational view of an example embodiment of a tire sipe blade **600** taken about a view B-B.

Tire sipe blade **600** may include S-shaped geometry having an amplitude **A1.** Amplitude **A1** may be any of a variety of values. In one embodiment, amplitude **A1** may range between about 0.25 mm and about 20.0 mm. In another embodiment, amplitude **A1** may be greater than about 20.0 mm. In another embodiment, amplitude **A1** may be less than about 0.25 mm.

Tire sipe blade **600** may include S-shaped geometry having a wavelength **F1.** Wavelength **F1** may be any of a variety of values. In one embodiment, wavelength **F1** may range between about 0.25 mm and about 125.0 mm. In another embodiment, wavelength **F1** may be greater than about 125.0 mm. In another embodiment, wavelength **F1** may be less than about 0.25 mm.

Tire sipe blade **600** may comprise a thickness **T1.** Thickness **T1** may be any of a variety of values. In one embodiment, thickness **T1** may range between about 0.25 mm and about 10.0 mm. In another embodiment, thickness **T1** may be greater than about 10.0 mm. In another embodiment, thickness **T1** may be less than about 0.25 mm.

Tire sipe blade **600** may comprise a length **L.** Length **L** may be any of a variety of values. In one embodiment, length **L** may range between about 2.00 mm and about 900.0 mm. In another embodiment, length **L** may be greater than about 900.0 mm. In another embodiment, length **L** may be less than about 2.00 mm.

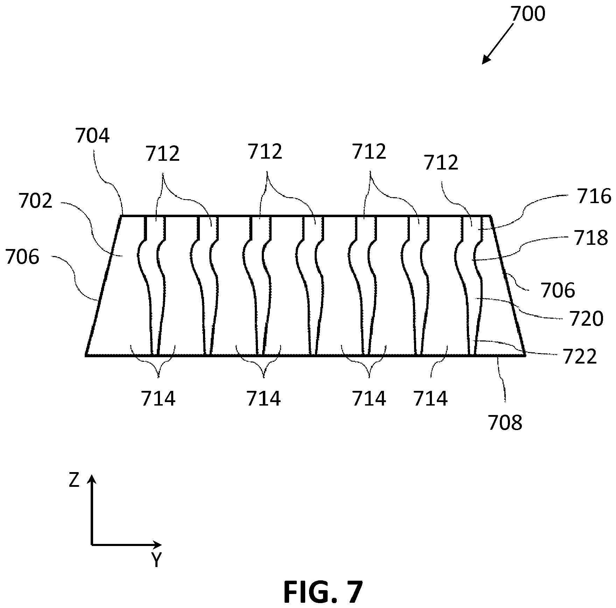

**FIG. 7** illustrates a plan view of an example embodiment of a tire tread **700.** Tread **700** may comprise a tread block **702.** Tread block **702** may comprise a ground-contacting surface **704,** at least one side surface **706,** and a base **708.**

**FIG. 7** represents a plan view wherein tread block **702** was separated into two halves at the sipe (not shown), which may substantially correspond to a YZ-plane. The sipe (not shown) may comprise at least one convex portion **712,** and at least one concave portion **714.** At least one convex portion **712** and at least one concave portion **714** may alternate to result in an S-shaped geometry within the sipe (not shown). In one embodiment, at least one convex portion **712** and at least one concave portion **714** may correspond to at least one convex portion **112** and at least one concave portion **114** illustrated in **FIG. 1****.**

In one embodiment, at least one convex portion **712** comprises a substantially S-shaped geometry in a YZ-plane. At least one convex portion **712** may comprise an upper vertical section **716,** a first curvilinear portion **718,** a second curvilinear portion **720,** and a lower vertical section **722.** Upper vertical section **716** may communicate with ground-contacting portion **704.** Lower vertical section **722** may contact base **708.**

In one embodiment, first curvilinear portion **718** and second curvilinear portion **720** of the sipe (not shown) may comprise a S-shaped geometry similar to a sinusoidal curve. The amplitude of the curve in the sipe (not shown) may be varying along the height of the sipe (not shown). In one embodiment, the amplitude of the curve in the sipe (not shown) may be reduced as the curve extends from the radially outermost portion of the curve (i.e., toward ground-contacting surface **704** of tread block **702**) toward the radially innermost portion of the curve (i.e., toward base **708.**

In one embodiment, the wavelength of the curve in the sipe (not shown) varies along the height of the sipe (not shown). In one embodiment, a plurality of sipes (not shown) may be contained within tread block **702** or tread rib (not shown), and the curves of the sipes (not shown) may be in phase with one another. Alternatively, the curves of the sipes (not shown) may be out of phase with one another.

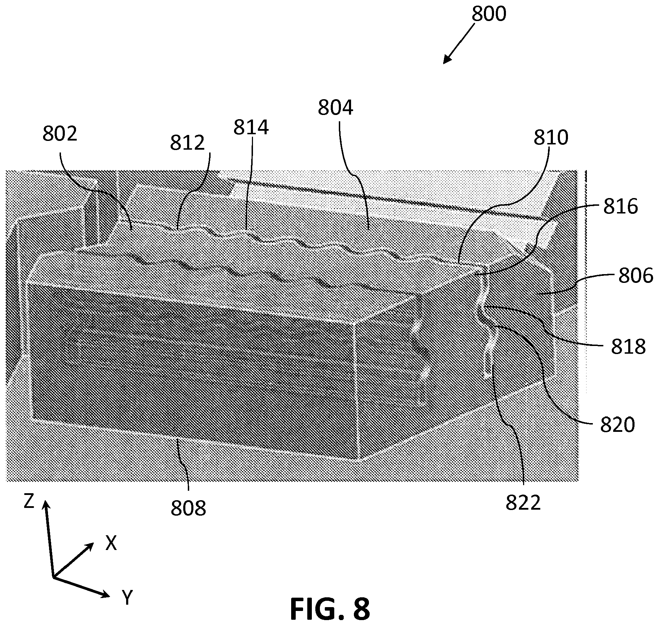

**FIG. 8** illustrates a perspective view of an example embodiment of a tire tread **800.** Tire tread **800** may comprise a tread block **802.** Tread block **802** may comprise a ground-contacting surface **804,** at least one side surface **806,** and a base **808.**

Tread block **802,** or a tread rib (not shown), may comprise at least one sipe **810.** At least one sipe **810** may comprise at least one convex portion **812** and at least one concave portion **814.** In one embodiment, sipe **810** comprises alternating convex portions **812** and concave portions **814** forming an S-shaped geometry in a plane substantially parallel to an XY-plane.

At least one sipe **810** may comprise an upper vertical section **816,** a first curvilinear portion **818,** a second curvilinear portion **820,** and a lower vertical section **822.** First curvilinear portion **818** and second curvilinear portion **820** may form an S-shaped geometry in a plane substantially parallel to an XZ-plane.

As illustrated in **FIG. 8****,** at least one sipe **810** may comprise an S-shaped geometry in each of an XY-plane, an XZ-plane, and a YZ-plane. In another embodiment, at least one sipe **810** may comprise an S-shaped geometry in at least one of an XY-plane, an XZ-plane, and a YZ-plane. In another embodiment, at least one sipe **810** may comprise an S-shaped geometry in at least two of an XY-plane, an XZ-plane, and a YZ-plane. In one embodiment, at least one sipe **810** may comprise a curve having an amplitude that varies along the height of sipe **810** in a YZ-plane.

In one embodiment, the S-shaped geometry within sipe **810** creates a series of protrusions and indentations configured to engage one another and increase stiffness of tread block **802** or a tread rib (not shown). Increased stiffness of tread block **802** or a tread rib (not shown) may prevent, mitigate, or reduce irregular wearing of tread block **802** or a tread rib (not shown).

In one embodiment, the S-shaped geometry within sipe **810** eliminates the direct path extending radially-inwardly from a ground-contact surface as featured in traditional sipes. The S-shaped geometry may create an indirect path that prevents stones or other debris from entering, or lodging, within sipe **810.** In this manner, the S-shaped geometry may prevent stones or other debris from reducing sipe **810**'s effectiveness at increasing traction, causing damage to tire tread **800** and/or tread block **802,** and/or creating a safety hazard resulting from lodged stones or other debris being ejected during tire operation.

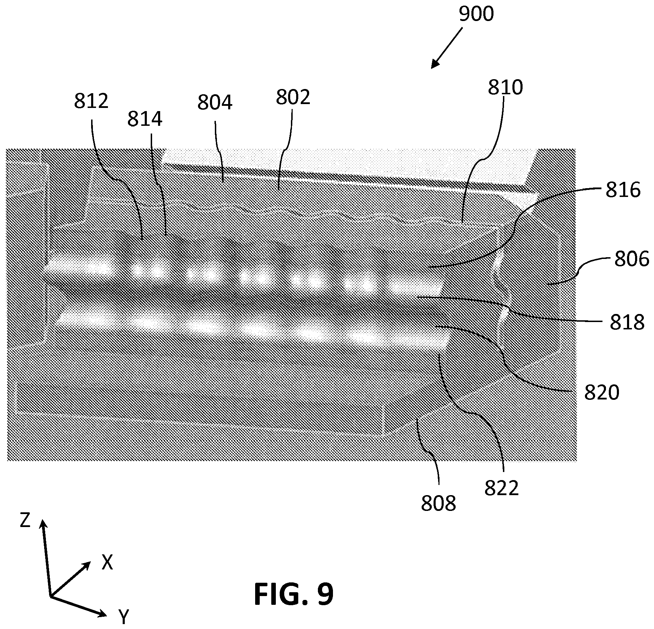

**FIG. 9** illustrates a plan view of an example embodiment of a tire tread **900.** Tire tread **900** may comprise a tread block **802.** Tread block **802** may comprise a ground-contacting surface **804,** at least one side surface **806,** and a base **808.**

**FIG. 9** represents a plan view wherein tread block **802** was separated into two halves at the sipe (not shown), which may substantially correspond to a YZ-plane.

Tread block **802,** or a tread rib (not shown), may comprise at least one sipe (not shown). At least one sipe (not shown) may comprise at least one convex portion **812** and at least one concave portion **814.** In one embodiment, a sipe (not shown) comprises alternating convex portions **812** and concave portions **814** forming an S-shaped geometry in a plane substantially parallel to an XY-plane.

At least one sipe (not shown) may comprise an upper vertical section **816,** a first curvilinear portion **818,** a second curvilinear portion **820,** and a lower vertical section **822.** First curvilinear portion **818** and second curvilinear portion **820** may form an S-shaped geometry in a plane substantially parallel to an XZ-plane.

As illustrated in **FIG. 9****,** at least one sipe (not shown) may comprise an S-shaped geometry in each of an XY-plane, an XZ-plane, and a YZ-plane. In another embodiment, at least one sipe (not shown) may comprise an S-shaped geometry in at least one of an XY-plane, an XZ-plane, and a YZ-plane. In another embodiment, at least one sipe (not shown) may comprise an S-shaped geometry in at least two of an XY-plane, an XZ-plane, and a YZ-plane. In one embodiment, at least one sipe (not shown) may comprise a curve having an amplitude that varies along the height of the sipe (not shown) in a YZ-plane.

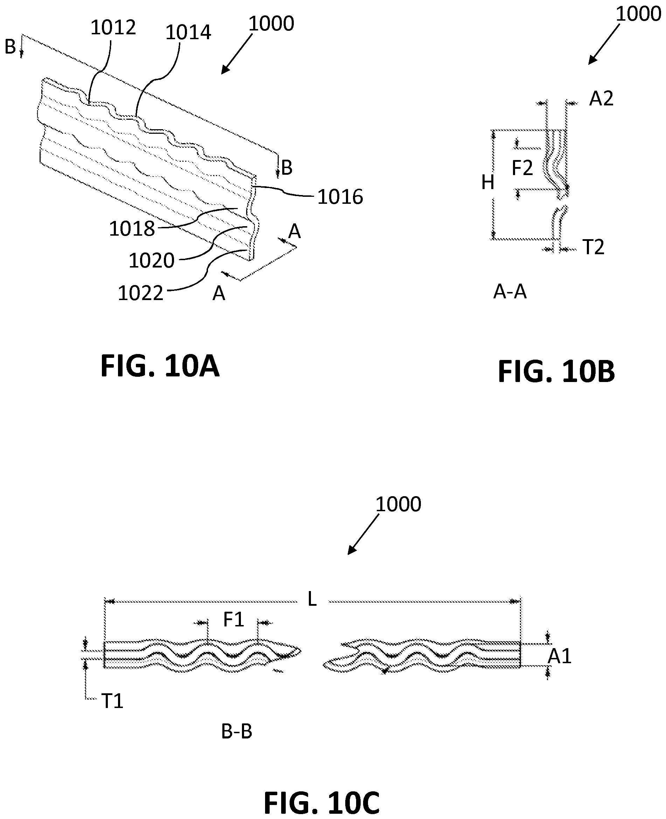

**FIG. 10A** illustrates a perspective view of an example embodiment of a tire sipe blade **1000.** Tire sipe blade **1000** may be used in forming a sipe featuring an S-shaped geometry. A tire formed using tire sipe blade **1000** may have sipe dimensions substantially similar to those described below with respect to tire sipe blade **1000.**

As illustrated, tire sipe blade **1000** may comprise an S-shaped geometry in planes corresponding to each of an XY-plane, an XZ-plane, and a YZ-plane. In another embodiment, tire sipe blade **1000** may comprise an S-shaped geometry in at least one of an XY-plane, an XZ-plane, and a YZ-plane. In another embodiment, tire sipe blade **1000** may comprise an S-shaped geometry in at least two of an XY-plane, an XZ-plane, and a YZ-plane. In one embodiment, tire sipe blade **1000** may comprise a curve having an amplitude that varies along the height of sipe blade **1000** in a YZ-plane. In one embodiment, tire sipe blade **1000** may comprise a curve having an amplitude that decreases along the height of sipe blade **1000** in a YZ-plane.

Tire sipe blade **1000** may comprise at least one convex portion **1012,** at least one concave portion **1014,** an upper vertical section **1016,** a first curvilinear portion **1018,** a second curvilinear portion **1020,** and a lower vertical section **1022.**

**FIG. 10B** illustrates a side elevational view of an example embodiment of a tire sipe blade **1000** taken about a view A-A.

Tire sipe blade **1000** may include S-shaped geometry having an amplitude **A2.** Amplitude **A2** may be any of a variety of values. In one embodiment, amplitude **A2** may range between about 0.25 mm and about 20.0 mm. In another embodiment, amplitude **A2** may be greater than about 20.0 mm. In another embodiment, amplitude **A2** may be less than about 0.25 mm.

Tire sipe blade **1000** may include S-shaped geometry having a wavelength **F2.** Wavelength **F2** may be any of a variety of values. In one embodiment, wavelength **F2** may range between about 1.00 mm and about 85.0 mm. In another embodiment, wavelength **F2** may be greater than about 85.0 mm. In another embodiment, wavelength **F2** may be less than about 1.00 mm.

Tire sipe blade **1000** may comprise a thickness **T2.** Thickness **T2** may be any of a variety of values. In one embodiment, thickness **T2** may range between about 0.25 mm and about 10.0 mm. In another embodiment, thickness **T2** may be greater than about 10.0 mm. In another embodiment, thickness **T2** may be less than about 0.25 mm.

Tire sipe blade **1000** may comprise a height **H.** Height **H** may be any of a variety of values. In one embodiment, height **H** may range between about 3.00 mm and about 275.0 mm. In another embodiment, height **H** may be greater than about 275.0 mm. In another embodiment, height **H** may be less than about 3.00 mm.

**FIG. 10C** illustrates a top elevational view of an example embodiment of a tire sipe blade **1000** taken about a view B-B.

Tire sipe blade **1000** may include S-shaped geometry having an amplitude **A1.** Amplitude **A1** may be any of a variety of values. In one embodiment, amplitude **A1** may range between about 0.25 mm and about 20.0 mm. In another embodiment, amplitude **A1** may be greater than about 20.0 mm. In another embodiment, amplitude **A1** may be less than about 0.25 mm.

Tire sipe blade **1000** may include S-shaped geometry having a wavelength **F1.** Wavelength **F1** may be any of a variety of values. In one embodiment, wavelength **F1** may range between about 1.00 mm and about 85.0 mm. In another embodiment, wavelength **F1** may be greater than about 85.0 mm. In another embodiment, wavelength **F1** may be less than about 1.00 mm.

Tire sipe blade **1000** may comprise a thickness **T1.** Thickness **T1** may be any of a variety of values. In one embodiment, thickness **T1** may range between about 0.25 mm and about 10.0 mm. In another embodiment, thickness **T1** may be greater than about 10.0 mm. In another embodiment, thickness **T1** may be less than about 0.25 mm.

Tire sipe blade **1000** may comprise a length **L.** Length **L** may be any of a variety of values. In one embodiment, length **L** may range between about 2.00 mm and about 900.0 mm. In another embodiment, length **L** may be greater than about 900.0 mm. In another embodiment, length **L** may be less than about 2.00 mm.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See Bryan A. Garner, A Dictionary of Modern Legal Usage 624 (2d. Ed. 1995). Also, to the extent that the terms "in" or "into" are used in the specification or the claims, it is intended to additionally mean "on" or "onto." To the extent that the term "substantially" is used in the specification or the claims, it is intended to take into consideration the degree of precision available or prudent in manufacturing. To the extent that the term "selectively" is used in the specification or the claims, it is intended to refer to a condition of a component wherein a user of the apparatus may activate or deactivate the feature or function of the component as is necessary or desired in use of the apparatus. To the extent that the term "operatively connected" is used in the specification or the claims, it is intended to mean that the identified components are connected in a way to perform a designated function. As used in the specification and the claims, the singular forms "a," "an," and "the" include the plural. Finally, where the term "about" is used in conjunction with a number, it is intended to include ± 10% of the number. In other words, "about 10" may mean from 9 to 11. Cartesian coordinates referenced herein are intended to comply with the SAE tire coordinate system.

As stated above, while the present application has been illustrated by the description of embodiments thereof, and while the embodiments have been described in considerable detail, it is not the intention of the applicants to be restricted to such detail. Additional advantages and modifications will readily appear to those skilled in the art, having the benefit of the present application. Therefore, the application, in its broader aspects, is not limited to the specific details, illustrative examples shown, or any apparatus referred to. Departures may be made from such details, examples, and apparatuses within the scope of the appended claims.

## Claims

1. A tire, comprising:
a tread (100) comprising at least one of a tread block (102) and a tread rib;
at least one of the tread block (102) and the tread rib comprising at least one sipe (110),
wherein the at least one sipe (110) comprises at least one convex portion (112) and at least one concave portion (114) forming an S-shaped geometry along at least a portion of a length of the sipe (110), wherein the S-shaped geometry along at least a portion of the length of the sipe (110) has an amplitude, and wherein the amplitude varies along a radial height of the sipe (110),
wherein the at least one sipe (110) includes an upper vertical section (216) and a lower vertical section (222) oriented substantially radially within the sipe (110), and
wherein the at least one sipe (110) includes a first curvilinear portion (218) and a second curvilinear portion (220) oriented substantially radially within the sipe (110), and forming an S-shaped geometry along the radial height of the sipe (110), **characterized in that**
the S-shaped geometry has a wavelength, and the wavelength of the S-shaped geometry varies along a height of the sipe (110).

2. The tire of claim 1, wherein the amplitude is reduced as the S-shaped geometry extends from a radially outermost portion to a radially innermost portion.

3. The tire of claim 1, wherein the upper vertical section (216) is in communication with a ground-contacting surface (104).

4. The tire of claim 1, wherein the sipe (110) is oriented substantially axially relative to the tire tread.

5. The tire of claim 1, wherein the S-shaped geometry has a wavelength, and wherein the wavelength of the S-shaped geometry is constant along a length of the sipe (110).

6. The tire of claim 1, wherein the S-shaped geometry has a wavelength, and wherein the wavelength of the S-shaped geometry varies along a length of the sipe (110).

7. The tire of claim 1, wherein the first curvilinear portion (218) communicates with a ground-contacting surface directly and the second curvilinear portion (220) communicates with a base (208) directly.

8. A tire sipe blade (600) for molding the tire of claim 1.

## Patentansprüche

1. Reifen, umfassend:
eine Lauffläche (100), die mindestens eines von einem Laufflächenblock (102) und einer Laufflächenrippe umfasst;
wobei mindestens eines von dem Laufflächenblock (102) und der Laufflächenrippe mindestens eine Lamelle (110) umfasst,
wobei die mindestens eine Lamelle (110) mindestens einen konvexen Abschnitt (112) und mindestens einen konkaven Abschnitt (114) umfasst, der entlang mindestens eines Abschnitts einer Länge der Lamelle (110) eine S-förmige Geometrie bildet, wobei die S-förmige Geometrie entlang mindestens eines Abschnitts der Länge der Lamelle (110) eine Amplitude aufweist, und wobei die Amplitude entlang einer radialen Höhe der Lamelle (110) variiert,
wobei die mindestens eine Lamelle (110) einen oberen vertikalen Abschnitt (216) und einen unteren vertikalen Abschnitt (222) einschließt, die innerhalb der Lamelle (110) im Wesentlichen radial ausgerichtet sind, und
wobei die mindestens eine Lamelle (110) einen ersten gekrümmten Abschnitt (218) und einen zweiten gekrümmten Abschnitt (220) einschließt, die innerhalb der Lamelle (110) im Wesentlichen radial ausgerichtet sind und eine S-förmige Geometrie entlang der radialen Höhe der Lamelle (110) bilden, **dadurch gekennzeichnet, dass**
die S-förmige Geometrie eine Wellenlänge aufweist und die Wellenlänge der S-förmigen Geometrie entlang einer Höhe der Lamelle (110) variiert.

2. Reifen nach Anspruch 1, wobei die Amplitude verringert wird, während die S-förmige Geometrie von einem radial äußersten Abschnitt zu einem radial innersten Abschnitt verläuft.

3. Reifen nach Anspruch 1, wobei der obere vertikale Abschnitt (216) mit einer Bodenkontaktfläche (104) in Verbindung steht.

4. Reifen nach Anspruch 1, wobei die Lamelle (110) im Wesentlichen axial relativ zu der Reifenlauffläche ausgerichtet ist.

5. Reifen nach Anspruch 1, wobei die S-förmige Geometrie eine Wellenlänge aufweist, und wobei die Wellenlänge der S-förmigen Geometrie entlang einer Länge der Lamelle (110) konstant ist.

6. Reifen nach Anspruch 1, wobei die S-förmige Geometrie eine Wellenlänge aufweist, und wobei die Wellenlänge der S-förmigen Geometrie entlang einer Länge der Lamelle (110) variiert.

7. Reifen nach Anspruch 1, wobei der erste gekrümmte Abschnitt (218) direkt mit einer Bodenkontaktfläche und der zweite gekrümmte Abschnitt (220) mit einer Basis (208) direkt in Verbindung steht.

8. Reifenprofilierungsklinge (600) zum Formen des Reifens nach Anspruch 1.

## Revendications

1. Pneumatique, comprenant :
une bande de roulement (100) comprenant au moins l'un parmi un pavé de bande de roulement (102) et une nervure de bande de roulement ;
au moins l'un parmi le pavé de bande de roulement (102) et la nervure de bande de roulement comprenant au moins une lamelle (110),
dans lequel l'au moins une lamelle (110) comprend au moins une partie convexe (112) et au moins une partie concave (114) formant une géométrie en forme de S le long d'au moins une partie d'une longueur de la lamelle (110), dans lequel la géométrie en forme de S le long d'au moins une partie de la longueur de la lamelle (110) a une amplitude, et dans lequel l'amplitude varie le long d'une hauteur radiale de la lamelle (110),
dans lequel l'au moins une lamelle (110) inclut une section verticale supérieure (216) et une section verticale inférieure (222) orientées de façon essentiellement radiale au sein de la lamelle (110), et
dans lequel l'au moins une lamelle (110) inclut une première partie curviligne (218) et une deuxième partie curviligne (220) orientées de façon essentiellement radiale au sein de la lamelle (110), et formant une géométrie en forme de S le long de la hauteur radiale de la lamelle (110), **caractérisé en ce que**
la géométrie en forme de S a une longueur d'ondulation, et la longueur d'ondulation de la géométrie en forme de S varie le long d'une hauteur de la lamelle (110).

2. Pneumatique selon la revendication 1, dans lequel l'amplitude est réduite à mesure que la géométrie en forme de S s'étend d'une partie radialement la plus externe à une partie radialement la plus interne.

3. Pneumatique selon la revendication 1, dans lequel la section verticale supérieure (216) est en communication avec une surface en contact avec le sol (104).

4. Pneumatique selon la revendication 1, dans lequel la lamelle (110) est orientée de façon essentiellement axiale par rapport à la bande de roulement de pneumatique.

5. Pneumatique selon la revendication 1, dans lequel la géométrie en forme de S a une longueur d'ondulation, et dans lequel la longueur d'ondulation de la géométrie en forme de S est constante le long d'une longueur de la lamelle (110).

6. Pneumatique selon la revendication 1, dans lequel la géométrie en forme de S a une longueur d'ondulation, et dans lequel la longueur d'ondulation de la géométrie en forme de S varie le long d'une longueur de la lamelle (110).

7. Pneumatique selon la revendication 1, dans lequel la première partie curviligne (218) communique avec une surface en contact avec le sol directement et la deuxième partie curviligne (220) communique avec une base (208) directement.

8. Lame d'incision de pneumatique (600) pour le moulage du pneumatique selon la revendication 1.
